**Europäisches Patentamt**

**European Patent Office**

**Office européen des brevets**

(19)

(11) Veröffentlichungsnummer : **0 383 001 B1**

(12)

# EUROPÄISCHE PATENTSCHRIFT

(45) Veröffentlichungstag der Patentschrift :
**25.03.92 Patentblatt 92/13**

(51) Int. Cl.$^5$ : **F02B 23/06, F02F 3/26**

(21) Anmeldenummer : **89890325.7**

(22) Anmeldetag : **18.12.89**

(54) **Luftverdichtende, ventilgesteuerte Brennkraftmaschine.**

(30) Priorität : **15.02.89 AT 341/89**

(43) Veröffentlichungstag der Anmeldung :
**22.08.90 Patentblatt 90/34**

(45) Bekanntmachung des Hinweises auf die
Patenterteilung :
**25.03.92 Patentblatt 92/13**

(84) Benannte Vertragsstaaten :
**DE ES FR GB IT NL SE**

(56) Entgegenhaltungen :
**DE-B- 1 022 415**
**FR-A- 2 406 722**
**GB-A- 2 039 608**
**GB-A- 2 103 713**

(73) Patentinhaber : **AVL Gesellschaft für**
**Verbrennungskraftmaschinen und**
**Messtechnik mbH.Prof.Dr.Dr.h.c. Hans List**
**Kleiststrasse 48**
**A-8020 Graz (AT)**

(72) Erfinder : **Schweinzer, Franz, Dipl.-Ing.**
**Fischeraustrasse 57/4/25**
**A-8051 Graz (AT)**
Erfinder : **Maier, Hans**
**Stiftingtalstrasse 71**
**A-8010 Graz (AT)**

(74) Vertreter : **Krause, Walter, Dr. Dipl.-Ing. et al**
**Postfach 200 Singerstrasse 8**
**A-1010 Wien (AT)**

## Beschreibung

Die Erfindung betrifft eine luftverdichtende, ventilgesteuerte Brennkraftmaschine mit direkter Kraftstoffeinspritzung und drallbeaufschlagter Ladeluft, mit einem im Kolben angeordneten Brennraum, welcher einen torusförmigen Abschnitt aufweist, welcher in Richtung zur Kolbenoberseite in einen eine Einschnürung bildenden zylinderförmigen Abschnitt übergeht, wobei ein an der Bildung des torusförmigen Abschnittes beteiligter zentrischer Mittenteil vorgesehen ist, dessen Oberteil im O.T. des Kolbens bis knapp unterhalb des Kraftstoffstrahl-Bereiches der Einspritzdüse reicht und zusammen mit der Einschnürung einen engen, ringförmigen Überströmquerschnitt vom torusförmigen Abschnitt zum zylinderförmigen Abschnitt des Brennraumes bildet.

Eine Brennkraftmaschine der eingangs genannten Art ist aus der EP-A 0 271 478 bekannt. Der Brennraum dieser Brennkraftmaschine ist vom zentralen Bereich her durch einen rotationsförmigen Mittenteil begrenzt, dessen Oberteil mit der vom zylinderförmigen Abschnitt gebildeten Einschnürung einen engen kreisringförmigen Überströmquerschnitt bildet. Die Kraftstoffstrahlen der Einspritzdüse sind auf den Übergangsbereich zwischen torusförmigen und zylinderförmigen Abschnitt des Brennraumes gerichtet. Durch die Ausbildung des engen, ringförmigen Überströmquerschnittes wird eine hohe Gemischbildungsenergie bereitgestellt, wobei auftretende Drosselverluste eben durch diese erhöhte Gemischbildungsenergie und den daraus resultierenden besseren Verbrennungswerten kompensiert werden.

Besonders bei Brennkraftmaschinen mit hohem Einspritzdruck, wobei durchaus Spitzendrücke zwischen 600 bis über 1000 bar realisiert werden, kann der wandverteilte Kraftstoffanteil besser aufbereitet werden, als bei früher üblichen torusförmigen Brennräumen, wie diese beispielsweise aus der CH-PS 175 433 bekannt sind.

Der Mittenteil im Zentrum des Brennraumes der Brennkraftmaschine nach der EP-A 0 271 478 und die große verfügbare Oberfläche des Brennraumes verhindern ein für die Verbrennung nachteiliges Ineinanderlaufen von Kraftstoffilmen, die von verschiedenen Einspritzstrahlen stammen. Gleichzeitig verringert dieser Mittenteil die Ausbildung turbulenzarmer Zonen im Zentrum des Brennraumes. Die durch den engen Überströmquerschnitt im Zusammenhang mit dem Drall der Ladeluft erzeugte hohe Geschwindigkeit der Ladung bleibt in der torusförmigen Ringkammer über einen längeren Zeitraum erhalten und sorgt so für eine optimale Kraftstoffaufbereitung.

Als vorteilhafte Auswirkungen auf das Betriebsverhalten der Brennkraftmaschine sind folgende zu nennen: Die rauchbegrenzende Vollast kann erhöht werden. Es ist möglich, hohe Verdichtungen ($\epsilon = 19$ bis 24) zu realisieren, woraus ein niedrigeres Verbrennungsgeräusch durch kleineren Zündverzug, geringere Kohlenwasserstoff-Emissionen, ein günstigeres Startverhalten des Motors und eine Verbesserung des Wirkungsgrades der Brennkraftmaschine resultieren. Weiters ergibt sich die Möglichkeit, den Zündzeitpunkt in Richtung "spät" zu verlegen, ohne wesentlichen Rauch-, Verbrauchs- und HC-Anstieg, durch die Tatsache, daß die Gemischbildungsenergie über einen längeren Zeitraum hoch bleibt. Diese Möglichkeit bedeutet vor allem eine Absenkung von Stickoxiden, Verbrennungsgeräusch und Zylinderspitzendruck.

Nachteile treten lediglich dann auf, wenn bedingt durch eine exzentrische Lage der Kuppe der Einspritzdüse der mit seiner Achse im Bereich der Spitze der Einspritzdüse liegende Brennraum eine derart exzentrische Position im Kolben einnimmt, daß aufgrund unterschiedlicher Restwandstärken unterschiedliche thermische Belastungen entlang des Kolbenumfanges auftreten bzw. der zur Kolbenachse orientierte Drall, der durch den Einlaßkanal einströmenden Luft durch die exzentrische Lage des Brennraumes im torusförmigen Bereich nicht voll zur Kraftstoffaufbereitung ausgenützt werden kann.

Aufgabe der vorliegenden Erfindung ist es, eine Brennkraftmaschine der eingangs genannten Art so weiterzubilden, daß die obenangeführten Vorteile auch bei Brennkraftmaschinen mit konstruktionsbedingt exzentrischer Lage der Einspritzdüse voll zur Geltung kommt.

Diese Aufgabe wird erfindungsgemäß dadurch gelöst, daß die Achse des Brennraumes zwischen der Kuppe der Einspritzdüse und der Zylinderachse angeordnet ist, daß der ringförmige Überströmquerschnitt in seiner Breite variiert und in dem der Kuppe der Düsennadel am nächsten liegenden Bereich die engste Stelle aufweist, sowie daß der Oberteil des zentrischen Mittenteils asymmetrisch ausgebildet ist und im O.T. des Kolbens einen minimalen Abstand zu den Einspritzstrahlen aufweist. Durch die Verlagerung des Brennraumes weiter zur Kolben- bzw. Zylinderachse, erfolgt eine gleichmäßigere thermische Belastung des Kolbens, zusätzlich wird die Rotationsenergie der einströmenden Luft besser ausgenützt, was zu einer höheren Gemischbildungsenergie führt. Durch den in seiner Breite variierenden Übergangsquerschnitt ist im Auftreffbereich der kürzeren Einspritzstrahlen das Verhältnis der Breite des Überströmquerschnittes zum Durchmesser der erzeugenden Kreisfläche des Torus kleiner als im Auftreffbereich der längeren Einspritzstrahlen. Dies führt durch die Intensivierung der örtlichen Luftbewegung zur besseren Aufbereitung des in diesem Bereich erhöhten Wandanteiles des eingespritzten Kraftstoffes.

Um den Abstand des Oberteils des zentrischen Mittenteiles zu den Einspritzstrahlen zu minimieren, wird erfindungsgemäß vorgeschlagen, daß der Oberteil des zentrischen Mittenteils im wesentlichen als Kegel oder als Kegelstumpf ausgebildet ist, welcher eine die Düsenkuppe im O.T. des Kolbens aufnehmende Freistellung oder Ausnehmung aufweist. Es ist auch möglich von der Kegelform abzuweichen und beispielsweise den Oberteil als Teil einer Kugel auszuführen, solange der geforderte minimale Abstand der Einspritzstrahlen eingehalten werden kann.

Für den im Sinne der Erfindung abgeänderten Brennraum hat es sich als vorteilhaft erwiesen, wenn 4- bis 9-Lochdüsen bei einem mittleren Drallniveau $(n_D/n)_m$ = 1,5 bis 3,0 verwendet werden, worin $n_D$ die im Stationärversuch ermittelte Flügeldrehzahl des Drallmeßgerätes und n die aus der gemessenen Durchflußmenge berechnete Motordrehzahl ist, und der Index m ausdrückt, daß das Verhältnis $n_D/n$ den von O.T. bis U.T. des Kolbens integrierten Mittelwert darstellt.

Dabei sollte die mittlere freie Strahllänge erfindungsgemäß 15 bis 35 % des Zylinderdurchmessers D betragen.

Eine besonders vorteilhafte Ausgestaltung des Brennraumes der erfindungsgemäßen Brennkraftmaschine wird dadurch erreicht, daß die Mantelerzeugende des Oberteiles des zentrischen Mittenteiles im O.T. des Kolbens einen äquidistanten Abstand $d_1$ von 2 bis 8 mm zur Mittelachse der Einspritzstrahlen aufweist, oder daß die Mantelerzeugende des Oberteiles des zentrischen Mittenteiles im O.T. des Kolbens einen äquidistanten Abstand $d_2$ von 1 bis 6 mm zum Ausbreitungskegel der Einspritzstrahlen aufweist, wobei der Öffnungswinkel $\alpha$ des Ausbreitungskegels 4 bis 20° beträgt.

Dabei ist es schließlich von Vorteil, wenn die Achse des für die Mittelachsen aller Einspritzstrahlen gemeinsamen Kegels mit der Rotationsachse des vorzugsweise kegel- oder kegelstumpfförmigen Oberteiles zusammenfällt.

Die Erfindung wird im folgenden anhand von Zeichnungen näher erläutert. Es zeigen:

Fig. 1 einen Axialschnitt durch den Zylinder einer Brennkraftmaschine nach der Erfindung,

Fig. 2 eine Draufsicht auf den Kolben nach Fig. 1,

Fig. 3 eine Ausführungsvariante nach Fig. 1 im Detail,

Fig. 4 eine Draufsicht auf die Ausführungsvariante nach Fig. 3,

Fig. 5a bis 5c Details der Brennraumkontur und

Fig. 6 ein Diagramm, welches den Abstand der Mittelachse der Einspritzstrahlen in Abhängigkeit von der Strahllänge darstellt.

Gleiche Teile sind jeweils mit denselben Bezugszeichen versehen.

Der im Zylinder 1 mit dem Durchmesser D axial bewegliche Kolben 2 weist einen Brennraum 3 auf, welcher aus einem torusförmigen Abschnitt 4 besteht, dessen Mittenpunktskreisradius mit R bezeichnet ist und dessen erzeugender Kreis einen Radius r besitzt. Es ist natürlich möglich von der Kreisfläche abweichende erzeugende Flächen für den torusförmigen Abschnitt zu verwenden, insbesondere solche bei welchen der torusförmige Abschnitt 4 aus zwei stetig ineinander übergehenden Teilen mit jeweils unterschiedlichem R und r zusammengesetzt ist. Der Brennraum 3 weist ferner eine zur Zylinderachse 1′ parallele Achse 4′ und einen zur Kolbenoberseite 5 hin offenen zylinderförmigen Abschnitt 6 auf, der gegenüber dem torusförmigen Abschnitt 4 des Brennraumes 3 eine Einschnürung 6′ bildet. Der Brennraum 3 weist einen Mittenteil 7 auf, der in seinem unteren Teil 7′ an der Bildung des torusförmigen Abschnittes 4 des Brennraumes 3 beteiligt ist und mit seinem Oberteil 11 im O.T. des Kolbens 2 bis knapp unterhalb der von der Einspritzdüse 8 ausgehenden Kraftstoffstrahlen 9 bleibt, sodaß die obere Begrenzungsfläche des Mittenteiles 7 von den Einspritzstrahlen nicht oder nur geringfügig benetzt wird. Die Einspritzstrahlen 9 sind gegen den Übergangsbereich 10 des torusförmigen Abschnittes 4 zum zylindrischen Abschnitt 6 des Brennraumes gerichtet.

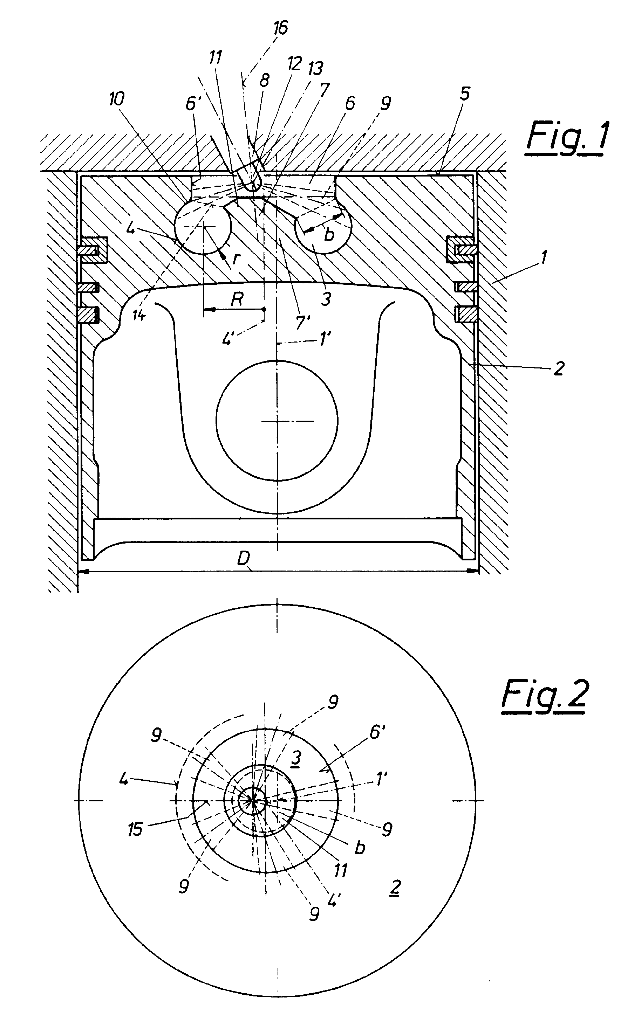

Wie insbesondere aus Fig. 1 ersichtlich, liegt die Einspritzdüse 8 außerhalb der Zylinderachse 1′. Bedingt durch die Verlagerung des Brennraumes 3 in Richtung zur Zylinderachse 1′ kommt es zu einer exzentrischen Lage der Kuppe 12 der Einspritzdüse 8, wobei es hier im wesentlichen auf die exzentrische Anordnung der Einspritzstrahlwurzeln 13 im Bezug auf die Achse 4′ des Brennraumes 3 ankommt. Soll nun der Oberteil 11 des zentrischen Mittenteiles 7 im O.T. des Kolbens 2 einen minimalen Abstand zu den Einspritzstrahlen 9 aufweisen, so muß der Oberteil 11 asymmetrisch, beispielsweise als schiefer Kegel oder Kegelstumpf ausgebildet sein, wobei die Achse 16 dieses Kegels mit der Achse des für die Mittelachsen aller Einspritzstrahlen 9 gemeinsamen Kegels zusammenfallen kann. Der ringförmige Überströmquerschnitt 14 zwischen torusförmigem 4 und zylinderförmigem Abschnitt 6 varriert dadurch in seiner Breite b, wobei - wie insbesondere in Fig. 2 ersichtlich - in dem der Kuppe 12 der Düsennadel 8 näherliegenden Bereich 15 die engste Stelle liegt.

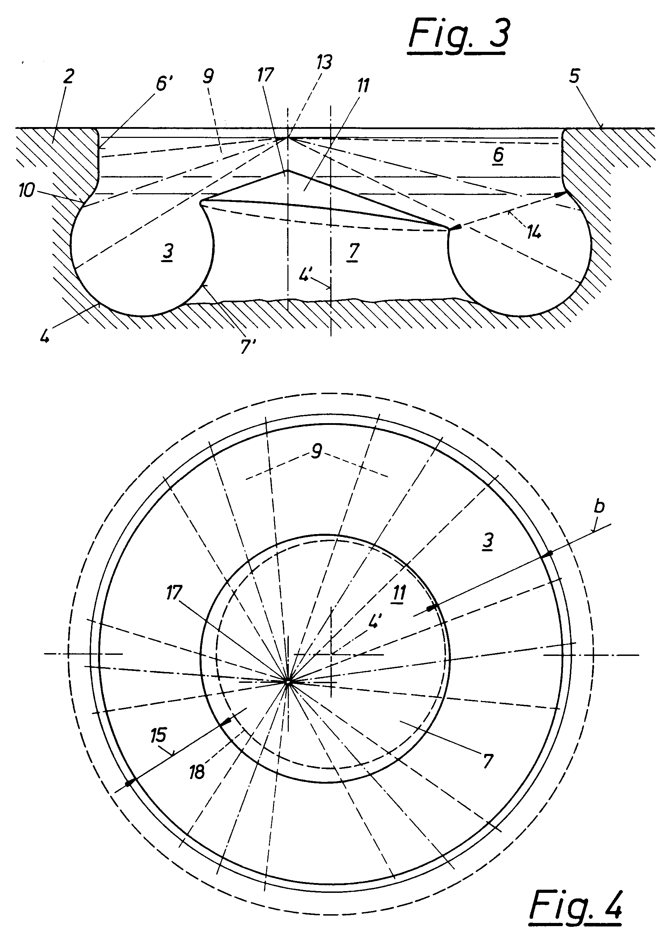

Bei der in Fig. 3 und 4 dargestellten Ausführungsvariante ist der Oberteil 11 des Mittenteils 7 als Kegel ausgeführt, dessen Spitze 17 gegenüber der Achse 4′ des Brennraumes 3 verschoben ist, wodurch die Breite b des Übergangsquerschnittes 14 von dem durch die strichlierte Linie 18 angedeuteten konstanten Wert abweicht und der Übergangsquerschnitt im Bereich 15 die engste Stelle annimmt.

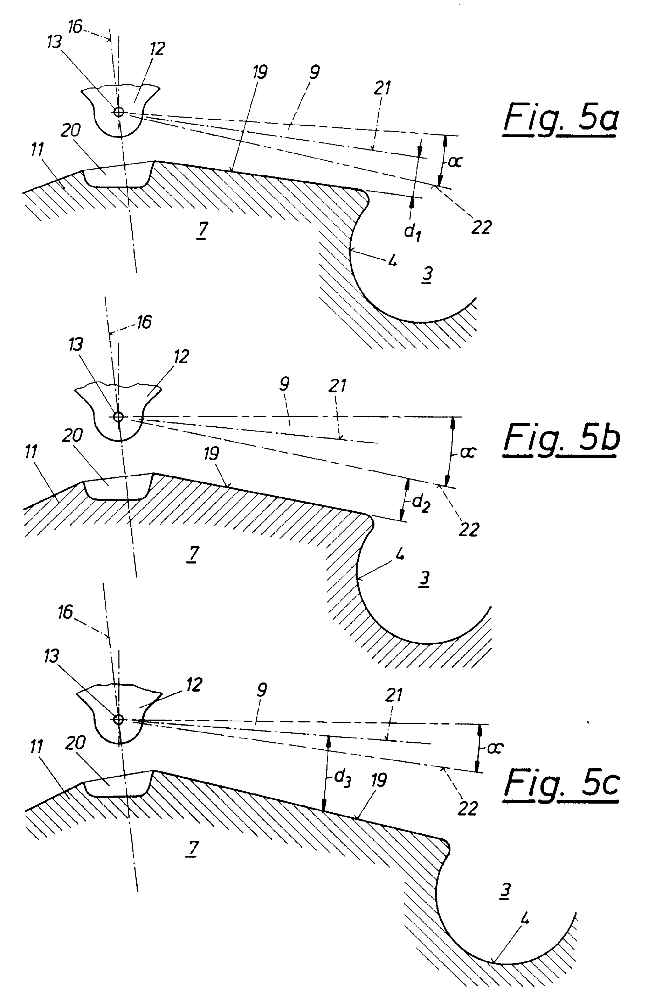

Bei der in den Fig. 5a bis 5c dargestellten Variante des Brennraumes 3 ist jeweils lediglich ein Teil der Kontur des Oberteils 11 des zentrischen Mittenteils 7 dargestellt, wobei insbesondere die Lage bzw. der Abstand der Mantelerzeugenden 19 des Oberteils 11 zum Einspritzstrahl 9 hervorgehoben ist. Die Düsenkuppe 12 wird hier im O.T. des Kolbens von einer Ausnehmung 20 im Oberteil aufgenommen.

So weist beispielsweise in Fig. 5a die Mantelerzeugende 19 im O.T. des Kolbens einen äquidistanten Abstand $d_1$ von 2 bis 8 mm zur Mittelachse 21 des Einspritzstrahles 9 auf. In Fig. 5b ist die Mantelerzeugende 19 1 bis 6 mm vom Ausbreitungskegel 22 des Einspritzstrahles 9 entfernt, wobei der entsprechende Abstand mit $d_2$ bezeichnet ist.

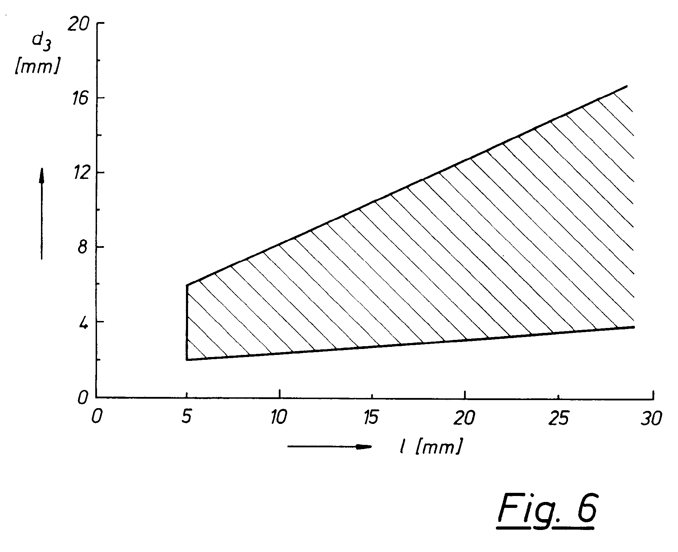

Schließlich genügt der Abstand $d_3$ zwischen Mantelerzeugender 19 und Mittelachse 21 des Einspritzstrahles 9 in Fig. 5c der Gleichung $d_3 = f(1)$, wobei f(1) durch das Diagramm in Fig. 6 wiedergegeben wird und 1 die von der Strahlwurzel gemessene Länge des Einspritzstrahles ist. Der Öffnungswinkel $\alpha$ des Ausbreitungskegels 22 beträgt 4 bis 20°.

## Patentansprüche

1. Luftverdichtende, ventilgesteuerte Brennkraftmaschine mit direkter Kraftstoffeinspritzung und drallbeaufschlagter Ladeluft, mit einem im Kolben (2) angeordneten Brennraum (3), welcher einen torusförmigen Abschnitt (4) aufweist, welcher in Richtung zur Kolbenoberseite (5) in einen eine Einschnürung bildenden zylinderförmigen Abschnitt (6) übergeht, wobei ein an der Bildung des torusförmigen Abschnittes beteiligter zentrischer Mittenteil (7) vorgesehen ist, dessen Oberteil im O.T. des Kolbens bis knapp unterhalb des Kraftstoffstrahl-Bereiches der Einspritzdüse (8) reicht und zusammen mit der Einschnürung einen engen, ringförmigen Überströmquerschnitt (14) vom torusförmigen Abschnitt (4) zum zylinderförmigen Abschnitt (6) des Brennraumes (3) bildet, wobei die mit Düsenöffnungen versehenen Kuppe (12) der Einspritzdüse (8) exzentrisch im Zylinder (1) angeordnet ist, **dadurch gekennzeichnet**, daß die Achse (4') des Brennraumes (3) zwischen der Kuppe der Einspritzdüse (8) und der Zylinderachse (1') angeordnet ist, daß der ringförmige Überströmquerschnitt (14) in seiner Breite (b) variiert und in dem der Kuppe (12) der Düsennadel (8) am nächsten liegenden Bereich (15) die engste Stelle aufweist, sowie daß der Oberteil (11) des zentrischen Mittenteils (7) asymmetrisch ausgebildet ist und im O.T. des Kolbens (2) einen minimalen Abstand zu den Einspritzstrahlen (9) aufweist.

2. Brennkraftmaschine nach Anspruch 1, **dadurch gekennzeichnet,** daß der Oberteil (11) des zentrischen Mittenteils (7) im wesentlichen als Kegel oder als Kegelstumpf ausgebildet ist, welcher eine die Düsenkuppe (12) im O.T. des Kolbens (2) aufnehmende Freistellung oder Ausnehmung (20) aufweist.

3. Brennkraftmaschine nach Anspruch 1 oder 2, **gekennzeichnet durch** die Verwendung einer 4- bis 9-Lochdüse bei einem mittleren Drallniveau $(n_D/n)_m = 1,5$ bis 3,0, worin $n_D$ die im Stationärversuche ermittelte Flügeldrehzahl des Drallmeßgerätes und n die aus der gemessenen Durchflußmenge be rechnete Motordrehzahl ist, und der Index m ausdrückt, daß das Verhältnis $n_D/n$ den von O.T. bis U.T. des Kolbens integrierten Mittelwert darstellt.

4. Brennkraftmaschine nach Anspruch 3, **dadurch gekennzeichnet,** daß die mittlere freie Strahllänge 15 bis 35 % des Zylinderdurchmessers D beträgt.

5. Brennkraftmaschine nach einem der Ansprüche 1 bis 4, **dadurch gekennzeichnet,** daß die Mantelerzeugende (19) des Oberteiles (11) des zentrischen Mittenteiles (7) im O.T. des Kolbens (2) einen äquidistanten Abstand $d_1$ von 2 bis 8 mm zur Mittelachse (21) der Einspritzstrahlen (9) aufweist.

6. Brennkraftmaschine nach einem der Ansprüche 1 bis 4, **dadurch gekennzeichnet,** daß die Mantelerzeugende (19) des Oberteiles (11) des zentrischen Mittenteiles (7) im O.T. des Kolbens (2) einen äquidistanten Abstand $d_2$ von 1 bis 6 mm zum Ausbreitungskegel (22) der Einspritzstrahlen (9) aufweist, wobei der Öffnungswinkel ($\alpha$) des Ausbreitungskegels 4 bis 20° beträgt.

7. Brennkraftmaschine nach einem der Ansprüche 1 bis 6, **dadurch gekennzeichnet,** daß die Achse (16) des für die Mittelachsen (21) aller Einspritzstrahlen (9) gemeinsamen Kegels mit der Rotationsachse des vorzugsweise kegel- oder kegelstumpfförmigen Oberteiles (11) zusammenfällt.

## Claims

1. A valve-controlled compression-ignition engine with direct fuel injection and a swirling air charge, whose combustion chamer (3) is located in the piston (2) and is configured as a toroidal part (4) ending in a throat-like cylindrical part (6) towards the top (5) of the piston, a center part (7) being provided in the center of the combustion chamber, which forms part of the toroidal section, its top remaining just slightly below the fuel jet of the injection nozzle (8) at upper dead center of the piston and forming a narrow, ring-shaped overflow passage (14) together with the throat, leading from the toroidal part (4) to the cylindrical part (6) of the combustion chamber (3), and the tip (12) of the injection nozzle (8), which is provided with orifices, having an eccentric position the cylinder (1), wherein the axis (4′) of the combustion chamber (3) is situated between the tip of the injection nozzle (8) and the cylinder axis (1′), and wherein the ring-shaped overflow passage (14) is of varying width (b), its narrowest part lying in the area (15) closest to the tip (12) of the injection nozzle (8), and wherein the top (11) of the center part (7) is unsymmetrical in shape, with a minimum distance to the injection jets (9) at upper dead center of the piston (2).

2. An internal combustion engine according to claim 1, wherein the top (11) of the center part (7) essentially is configured as a cone or truncated cone, which is provided with an open space or recess (20) receiving the tip (12) of the injection nozzle (8) at upper dead center of the piston (2).

3. An internal combustion engine according to claim 1 or 2, wherein the nozzle has 4 to 9 holes and a mean level of angular momentum of $(n_D/n)_m = 1.5$ to 3.0, $n_D$ being thenumer of revolutions of the vanes of the angular momentum meter obtained in a stationary test, and n being the engine speed calculated from the measured flow, the index m signifying that the ratio $n_D/n$ represents the mean value integrated from upper to lower dead center of the piston.

4. An internal combustion engine according to claim 3, wherein the mean free length of the fuel jet is 15-35% of the diameter D of the cylinder.

5. An internal combustion engine according to any of claims 1 to 4, wherein the generator (19) of the cone of the top (11) of the center part (7) is equidistant to the center axis (21) of the injection jets (9) at upper dead center of the piston (2), the distance $d_1$ being 2-8 mm.

6. An internal combustion engine according to any of claims 1 to 4, wherein the generator (19) of the cone of the top (11) of the center part (7) is equidistant to the cone (22) formed by the injection jets (9), the distance $d_2$ being 1-6 mm, and the opening angle $\alpha$ of thesaid jet cone being 4-20°.

7. An internal combustion engine according to any of claims 1 to 6, wherein the axis (16) of the joint cone for the center axes (21) of all injection jets (9) coincides with the rotational axis of the top (11) of thecenter part (7), whose shape preferably is that of a cone or truncated cone.

## Revendications

1. Moteur à combustion interne, comprimant de l'air, commandé par soupapes, avec injection directe du carburant et air d'alimentation sollicité par giration, avec disposée dans le piston (2), une chambre de combustion (3) comportant une section (4) en forme de tore, se transformant en direction de la paroi supérieure (5) du piston en une section (6) en forme de cylindre constituant un étranglement, en prévoyant à la formation de la section en forme de tore une pièce intermédiaire centrale (7) associée, dont la partie supérieure s'étend, dans la partie supérieure du piston, juste au-dessous de la zone du jet de carburant issu de la buse d'injection (8) et constitue avec l'étranglement une section transversale de passage (14), étroite et en forme d'anneau, de la section (4) en forme de tore à la section (6) en forme de cylindre de la chambre de combustion (3), les extrémités (12) de la buse d'injection (8) prévues avec les ouvertures de buse étant excentrées dans le cylindre (1), caractérisé en ce que l'axe (4′) de la chambre de combustion (3) est placé entre l'extrémité de la buse d'injection (8) et l'axe (1′) du cylindre, en ce que la section de passage (14) en forme d'anneau est de largeur (b) variable et comporte la partie la plus étroite dans la zone la plus proche de l'extrémité de l'aiguille d'injection, et en ce que la partie supérieure (11) de la pièce intermédiaire centrale (7) est asymétrique et se trouve, dans la partie supérieure du piston (2), à une distance minimale du jet d'injection (9).

2. Moteur à combustion interne selon la revendication 1, caractérisé en ce que la partie supérieure (11) de la pièce intermédiaire centrale (7) est essentiellement constituée par un cône ou un tronc de cône, qui comporte un évidement ou une cavité (20) pour recevoir l'extrémité (12) de la buse dans la partie supérieure du piston (2).

3. Moteur à combustion interne selon la revendication 1 ou 2, caractérisé par l'emploi d'une buse à 4 à 9 trous avec un niveau moyen de giration $(n_D/n)_m = 1,5$ à 3,0, où $n_D$ est le nombre de tours del'appareil de mesure de giration déterminé en essai stationnaire et n le nombre de tours du moteur calculé à partir de la mesure de la quantité de carburant injectée, l'indice m exprimant que le rapport $n_D/n$ représente la valeur moyenne intégrée de la partie supérieure à la partie inférieure du piston.

4. Moteur à combustion interne selon la revendication 3, caractérisé en ce que la longueur libre moyenne du jet est de 15 à 35 % du diamètre D du cylindre.

5. Moteur à combustion interne selon l'une des revendications 1 à 4, caractérisé en ce que la génératrice de la chemise (19) de la partie supérieure (11) de la pièce intermédiaire centrale (7) dans la partie supérieure du piston (2) met en évidence une distance équidistante $d_1$ de 2 à 8 mm vis-à-vis de l'axe médian (21) du jet d'injection (9).

6. Moteur à combustion interne selon l'une des revendications 1 à 4, caractérisé en ce que la génératrice de la chemise (19) de la partie supérieure (11) de la pièce intermédiaire centrale (7) dans la partie supérieure du piston (2) met en évidence une distance équidistante de vis-à-vis du cône d'élargissement (22) du jet d'injection (9), l'angle d'ouverture (A) du cône d'élargissement étant de 4 à 20°.

7. Moteur à combustion interne selon l'une des revendications 1 à 6, caractérisé en ce que l'axe (16) du cône commun aux axes médians (21) de tous les jets d'injection (9) coïncide avec l'axe de rotation de la partie supérieure (11), de préférence en forme de cône ou de tronc de cône.

_Fig. 1_

_Fig. 2_

_Fig. 3_

_Fig. 4_

_Fig. 5a_

_Fig. 5b_

_Fig. 5c_

*Fig. 6*